# EUROPEAN PATENT APPLICATION

(11) **EP 3 437 959 A1**
(43) Date of publication of application: **06.02.2019**
(21) Application number: 18196572.4
(22) Date of filing: 12.08.2016
(51) Int. Cl.: B62B 3/00, B62B 5/02, B60G 9/02

(54) **ROLL CONTAINER**

(30) Priority: 12.08.2015 SE 1551067
(62) Divisional of application: 16183933.7
(71) Applicant: Rindus Industri AB, 280 23 Hästveda (SE)
(72) Inventor: Thornström, Ronny, 283 91 OSBY (SE)
(74) Representative: Ström & Gulliksson AB

(57) **Abstract**

Load carrying base for a roll container (1), said base (2) defining a front portion (3) and rear portion (4), wherein onto said base (2) are arranged four wheels (5, 5a) such that one wheel is arranged on the left and one on the right side of the front portion (3) and one wheel is arranged on the left and one on the right side of the rear portion (4) forming a front wheel pair and a rear wheel pair, wherein at least one wheel pair are caster wheels (5a).

## Description

### TECHNICAL FIELD

The present invention relates to a load carrying base for roll containers and more especially wheel arrangements and wheel suspensions for load carrying bases for roll containers facilitating traversing of obstacles such as doorsteps etc.

### BACKGROUND

When handling material or goods it is common to use roll containers or trolleys for facilitating transportation. The roll containers usually consist of a load carrying base, which can be fitted with walls, for example cage walls, for containing the goods. Other examples for which load carrying bases may be used include pallet trolleys, table trolleys, basket trolleys, platform trolleys, etc. The roll containers are often transported both indoors and outdoors by manual pushing/pulling or by connecting to a towing vehicle or towing device. A common application using roll containers is e.g. for transportation of laundry in hospitals.

Due to obvious reasons, the dimensions of the wheels that are fitted to these types of containers are limited. Therefore even smaller obstacles, such as doorsteps, can be noticeable and difficult to traverse especially when the roll container is filled with goods and therefore being heavier than empty. Usually, this is overcome by increasing speed and thereby using the inertia to overcome the obstacles and/or tilting the roll container when possible. This however causes unwanted strain and wear on the wheels of the roll container and may require the user to apply a lot of force to the roll container to pass over the obstacles.

The wheels of the roll container are attached to the common load carrying base. For non-planar floors or ground, which in practice is always the case as small irregularities are formed on every surface, one of the wheels may be left in non-contact with the floor. In these situations the remaining wheels must carry the weight of the roll container. As a consequence, when designing roll containers the choice of wheels must be compensated by a factor normally set by the wheel manufacturer. One common rule is that each wheel should be capable of carrying one third of the maximum weight of the roll container; using such rule there will be no damage to the wheels even if one wheel is temporarily left in non-contact with the floor. However, it would be desired to reduce the requirements of the wheels in order to improve simplicity and costs of the roll container.

### SUMMARY

In order to provide an improved solution for use with roll containers, pallet trolleys, platform trolleys, table trolleys, an idea of the present invention is to provide a load carrying base ensuring contact of all four wheels even if the ground or floor is irregular.

It is an object of the present invention to provide a load carrying base and more specifically a wheel arrangement for a load carrying base for roll containers that alleviates some of the problems with prior art. This object is achieved by a concept which is improved over prior art and which is set forth in the appended independent claims; preferred embodiments thereof being defined in the related dependent claims.

In a first aspect of the invention, a load carrying base for a roll container is provided. Said base is defining a front portion and a rear portion, wherein onto said base are arranged four wheels such that one wheel is arranged on the left and one on the right side of the front portion and one wheel is arranged on the left and one on the right side of the rear portion and thereby forming a front wheel pair and a rear wheel pair. At least one wheel pair are caster/castor wheels and at least one wheel pair is arranged on a pivoting member pivotably supported by the base. The pivoting member allows the wheel pair that is attached to either end of it to move in a vertical direction in relation to the base of the roll container. This makes traversing of obstacles easier since when one wheel hits an obstacle it does not have to lift the entire front or rear portion of the roll carrier, leaving all four wheels in contact with the floor.

An additional advantage of the present invention is associated with the fact that braking means may be provided on one wheel only. As all four wheels will always be in contact with the ground or floor, braking one wheel only will always ensure braking of the associated roll container or trolley.

Also, the improved solution presented herein will also be advantageous for roll containers or trolleys being used extensively. As these may skew, leading to non-planar configuration of the wheels, the pivoting member will in fact compensate for such skewing and still provide contact with the ground or floor for all four wheels.

Another advantage it also provides is relating to noise and vibrations. As the wheels are constantly in contact with the ground or floor, there will be no slamming as is the case for prior art roll containers.

The present invention will also make it possible to carry heavier loads, since the load will always be distributed on four wheels as long as irregularities of the underlying ground or floor is within the limits of the pivoting member.

Another advantage of the present invention is that the fixed wheels being prevented from swiveling and normally being arranged at the rear of the load carrying base, will always be in contact with the ground or floor. As these wheels provide the stability of the load carrying base, taking up axial forces during transportation, improved stability during transportation is provided.

A yet further advantage of the present invention is that it will be possible to replace a worn out wheel, even if the new wheel has a slightly larger radius than the replaced wheel. The pivoting member will ensure that this difference in radius within a wheel pair is compensated such that all wheels of the load carrying member are in contact with the ground or floor.

In an embodiment of the invention, the wheels of at least one wheel pair are arranged offset in the longitudinal direction of the base in relation to each other. The wheels being offset in the direction of travel or the longitudinal direction of the roll container results in that the probability of one wheel reaching an obstacle before the other wheels increases. This will decrease the required pushing or pulling force that is necessary to apply to the roll container for traversing the obstacle. Offsetting the wheels will also further improve the functionality of the pivot member.

In a further embodiment, a load carrying base is presented wherein the front wheel pair is arranged on a pivoting member. The front (in relation to the intended direction of travel) pivot member will allow the front wheel pair to easier traverse obstacles whilst the rear wheel pair provides stability.

According to one embodiment, a load carrying base is provided wherein the rear wheel pair is arranged on a pivoting member. The rear (in relation to the intended direction of travel) pivot member will allow the rear wheel pair to easier traverse obstacles whilst the front wheel pair provides stability.

In a further embodiment of the invention, a load carrying base is presented wherein the wheels of both wheel pairs are arranged offset in the longitudinal direction of the base in relation to each other such that the wheels on one side of the base are positioned forward of the respective wheels on the other side of the base.

According to another embodiment, a load carrying base is provided wherein the wheels of both wheel pairs are attached offset in the longitudinal direction of the base in relation to each other such that the wheels on one side of base are closer together than the wheels on the other side of the base.

In one embodiment of the invention, a load carrying base is provided wherein the longitudinal distance between the wheels in each offset wheel pair is in the range of 0-100 mm. The specified distances between the wheels allows the front wheel in a wheel pair to traverse a large portion or even the entire obstacle before the other wheel reaches the same obstacle.

In another embodiment, a load carrying base is provided wherein the pivoting member further comprises suspension means for regulating the pivoting motion of the member and biasing it towards a position in which it is parallel with the base. The suspension means provides improved stability since the biasing of the pivot member towards a position parallel with the base will keep the roll container upright, even when both front and rear wheel pairs are fitted with pivot members.

In one further embodiment, a load carrying base is presented wherein the pivoting member is allowed to pivot ± 0° to 3,5°, or more preferably ± 0° to 2,5° in relation to the base. The provided pivot angles of the pivot beam allow one wheel in a wheel pair to rise approximately 30 mm (depending on the length of the pivot member) above the other. This will allow sufficient vertical travel for the wheels in order to help traversing of the majority of obstacles that a roll container is subjected to.

In another embodiment, a load carrying base is provided wherein the pivoting member is centrally attached to the base such that it is pivotable around an axis essentially parallel with the longitudinal direction of the base. Since the pivot member is attached centrally approximately along the centerline of the roll container, less force will be required for achieving a vertical motion of the wheel due to the lever arm effect facilitating traverse of obstacles.

In a further embodiment, a roll container for carrying goods and for facilitating transportation of said goods is provided wherein said roll container comprises a load carrying base according to the invention. By providing a roll container with the load carrying base of the invention, an improved roll container is achieved which facilitates passage over obstacles and that distributes the load to each wheel more evenly than conventional roll containers.

According to a second aspect a load carrying base for a roll container, such as a pallet trolley, platform trolley, etc., is provided. Said base is defining a front portion and a rear portion, wherein onto said base are arranged four wheels such that one wheel is arranged on the left and one on the right side of the front portion and one wheel is arranged on the left and one on the right side of the rear portion and thereby forming a front wheel pair and a rear wheel pair. At least one wheel pair are caster/castor wheels and the wheels of at least one wheel pair are arranged offset in the longitudinal direction of the base in relation to each other.

In an embodiment, at least one wheel pair is arranged on a pivoting member pivotably supported by the base.

In a further embodiment, a load carrying base is presented wherein the front wheel pair is arranged on the pivoting member. The front (in relation to the intended direction of travel) pivot member will allow the front wheel pair to easier traverse obstacles whilst the rear wheel pair provides stability.

According to one embodiment, a load carrying base is provided wherein the rear wheel pair is arranged on a pivoting member. The rear (in relation to the intended direction of travel) pivot member will allow the rear wheel pair to easier traverse obstacles whilst the front wheel pair provides stability.

In a further embodiment of the invention, a load carrying base is presented wherein the wheels of both wheel pairs are arranged offset in the longitudinal direction of the base in relation to each other such that the wheels on one side of the base are positioned forward of the respective wheels on the other side of the base.

According to another embodiment, a load carrying base is provided wherein the wheels of both wheel pairs are attached offset in the longitudinal direction of the base in relation to each other such that the wheels on one side of base are closer together than the wheels on the other side of the base.

In one embodiment of the invention, a load carrying base is provided wherein the longitudinal distance between the wheels in each offset wheel pair is in the range of 0-100 mm. The specified distances between the wheels allows the front wheel in a wheel pair to traverse a large portion or even the entire obstacle before the other wheel reaches the same obstacle.

In another embodiment, a load carrying base is provided wherein the pivoting member further comprises suspension means for regulating the pivoting motion of the member and biasing it towards a position in which it is parallel with the base. The suspension means provides improved stability since the biasing of the pivot member towards a position parallel with the base will keep the roll container upright, even when both front and rear wheel pairs are fitted with pivot members.

In one further embodiment, a load carrying base is presented wherein the pivoting member is allowed to pivot ± 0° to 3,5°, or more preferably ± 0° to 2,5° in relation to the base. The provided pivot angles of the pivot beam allow one wheel in a wheel pair to rise approximately 30 mm (depending on the length of the pivot member) above the other. This will allow sufficient vertical travel for the wheels in order to help traversing of the majority of obstacles that a roll container is subjected to.

In another embodiment, a load carrying base is provided wherein the pivoting member is centrally attached to the base such that it is pivotable around an axis essentially parallel with the longitudinal direction of the base. Since the pivot member is attached centrally approximately along the centerline of the roll container, less force will be required for achieving a vertical motion of the wheel due to the lever arm effect facilitating traverse of obstacles.

In a further embodiment, a roll container for carrying goods and for facilitating transportation of said goods is provided wherein said roll container comprises a load carrying base according to the second aspect presented above.

### BRIEF DESCRIPTION OF THE DRAWINGS

Embodiments of the invention will be described in further detail in the following with reference to the accompanying drawings which illustrate non-limiting examples on how the embodiments can be reduced into practice and in which:
Fig. 1a shows a side view of roll container,
Fig 1b shows an isometric view of a roll container in the form of a pallet trolley;
Fig 1c shows a side view of the pallet trolley shown in Fig 1b, carrying a pallet;
Fig 2 shows a cross-sectional view of the load carrying base and a pivoting member being parallel with the base,
Fig 3 shows a cross-sectional view of the load carrying base and a pivoting member that is rotated in relation to the base,
Fig 4 shows a roll container with a possible offset wheel arrangement,
Fig 5 shows a roll container with a possible offset wheel arrangement according to another embodiment, and
Fig 6 shows a bottom view of a load carrying base with offset wheels and a pivoting member.

### DETAILED DESCRIPTION OF EMBODIMENTS

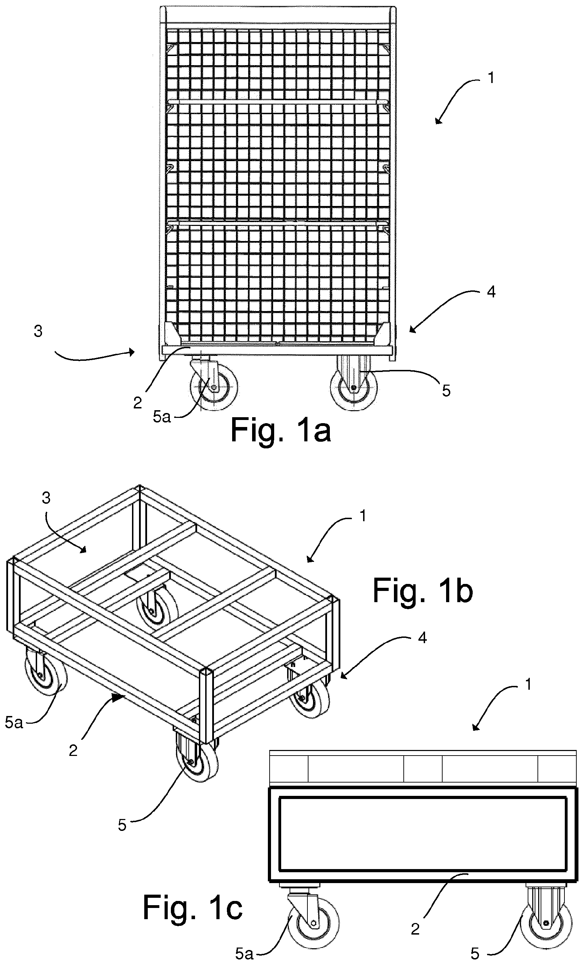

With reference to Fig 1a, a roll container is shown. The roll container 1 comprises a load carrying base 2 onto which the wheels 5, 5a are arranged and the optional walls are mounted. The walls can be of the type shown, i.e. cage walls, but they can also be any other type of wall that is suitable for the application in which the roll container 1 is used. The invention is therefore not limited to roll cage containers.

In Fig 1b-c another type of roll container is shown, here in the form of a pallet trolley. As for the roll container shown in Fig. 1a, the pallet trolley has a load carrying base 2 onto which the wheels 5, 5a are arranged.

As is shown in Figs 1a and 1b-c, the wheels 5, 5a are fitted to the underside of the base 2. The base has a forward portion 3 and a rear portion 4; however these portions 3, 4 are only defined for illustration purposes. The base can be transported with the front portion 3 first or the rear portion 4 first depending on the user preference. However, in the example shown, the front wheel pair has caster wheels 5a which facilitates turning and the rear wheels 5 are regularly fixed non-swiveling wheels providing directional stability. It is however conceivable that the base can also be fitted with four caster wheels.

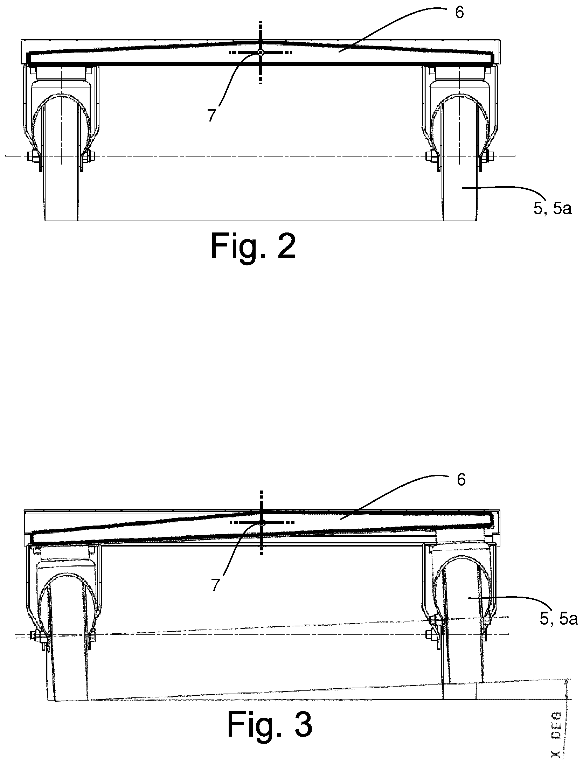

The base may further comprise one or several pivoting members 6, as can be seen in Fig 2. A pivoting member 6 may pivotably support the front portion 3, the rear portion 4 or both the front 3 and the rear portions 4 of the base 2 and onto each end of a pivoting member 6 is a respective wheel 5, 5a attached. I.e. one wheel pair is attached to a common pivoting member 6, therefore the vertical movement of one wheel 5, 5a will affect the other wheel 5, 5a on the member 6 as well.

The pivoting member is pivotable around an axis 7 where it is attached to the base 2, said axis being parallel with the longitudinal direction of the base 2. The pivoting member 6 is attached centrally to the base 2, which results in that a certain vertical movement of one wheel on the pivoting member 6 will generate smaller vertical movement of the base 2 than what a conventional wheel attached directly to the base would generate. Generally when a conventional base 2 reaches an obstacle with one wheel 5 first, that wheel takes the full load of the front part of the roll container and lifts the other wheel in the wheel pair of the ground.

Furthermore, due to the lever arm effect when using a pivoting member, a lower force will be required for lifting a wheel attached to the pivoting member. This means that traversing obstacles will be easier and the components will be subjected to less wear.

Fig 3 shows the pivoting member 6 slightly rotated in relation to the base when one of the wheels 5, 5a is on top of an obstacle. The shape of the pivoting member is such that it tapers towards the peripheral ends by the upper side of the member 6 being inclined. This prevents the member 6 from colliding with the base 2 during rotation.

A further advantage with the pivoting member 6 is that it ensures that all wheels 5, 5a of the base 2 is kept in contact with the ground and the load is therefore more evenly distributed to the ground than on a conventional base.

The pivoting member 6 can be allowed to pivot ± 0° to 3,5°, or more preferably ± 0° to 2,5° in relation to the base 2. This is illustrated in Fig 3 and the angle denoted as X DEG is shown as the difference between the pivoting wheels 5, 5a on the pivoting member 6 and the wheels behind which are parallel with the base 2. The pivoting member 6 can however also be configured such that it allows both larger and smaller pivoting angles depending on the intended use.

When only one wheel pair, i.e. the front or the rear wheel pair, is attached to base via a pivoting beam, the other wheel pair will stabilize the base 2 such that it does not to lean to one side. However, to provide even further stability, the pivoting member 6 can be provided with suspension means such that the member 6 is biased towards a position in which it is parallel with the base 2. The suspension means can be in the shape of a spring, such as a rotary spring around the pivoting axis 7 or coil springs attached to either end of the member 6, or rubber bushings or similar that provides resilient functionality to the member 6.

By biasing the pivoting member 6 towards a position parallel with the base 2, it is possible to arrange both the front and the rear wheel pairs on a respective pivoting beam 6 without risk of the base 2 leaning to one side.

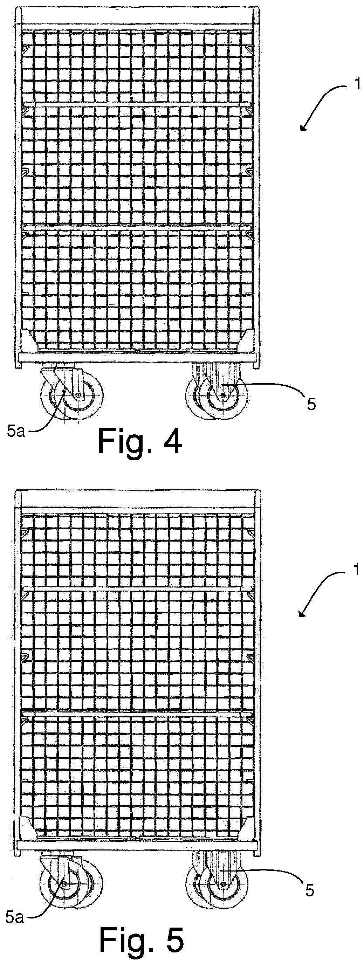

In Fig 4 a roll container 1 is shown in a side view. The wheels 5, 5a are attached to the base 2 in an offset manner in the longitudinal direction of the base 2 in relation to each other such that the wheels 5, 5a on one side of the base 2 are positioned forward of the respective wheels on the other side of the base 2. I.e. the left or the right wheel is positioned forwards of the other wheel in both the front and the rear wheel pair such that the wheels 5, 5a in both wheel pairs are offset in the same way.

The offset wheels will further improve the ability of the base 2 to traverse or pass over obstacles since only one wheel at the time reaches the obstacle. Furthermore, offsetting the wheels 5, 5 a will further improve the function of the pivoting beam 6. Since the pivoting member 6 will not pivot/rotate when both wheels 5, 5a of a wheel pair reaches an obstacle at the same time, offsetting the wheels 5, 5a will ensure that the pivot member 6 functions as intended when reaching the majority of obstacles.

In Fig 5, a roll container 1 is shown in a side view. The wheels 5, 5a are attached to the base 2 in an offset manner, i.e. the wheels 5, 5a of both wheel pairs are attached offset in the longitudinal direction of the base 2 in relation to each other such that the wheels 5, 5a on one side of base 2 are closer together than the wheels on the other side of the base 2. I.e. the wheels 5, 5a on the left or the right side in both wheel pairs are closer together than the respective wheels 5, 5a on the other side.

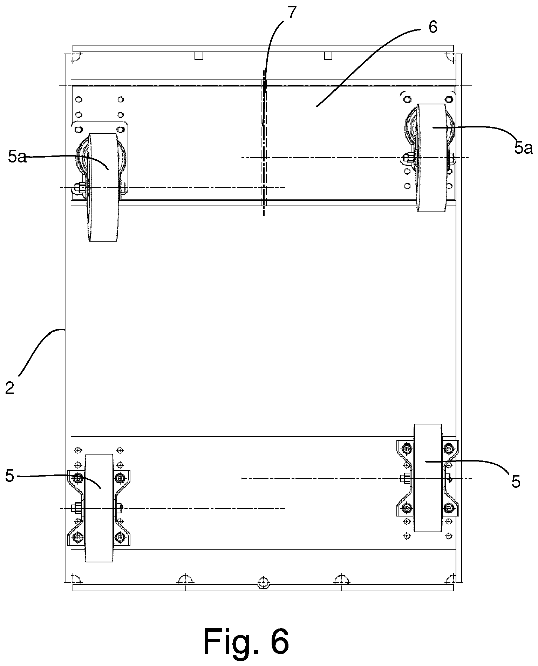

Fig 6 shows a bottom view of a base 2 where the offset of the wheels 5, 5a is clearly visible. The distance of the offset between the wheels 5, 5a in each wheel pair may be in the range of 0-100 mm, such as 55 mm. However, other distances are also possible since longer distance means better performance over in the travel direction extended obstacles.

Adjusting the distance between the wheels 5, 5a may be facilitated by providing pre-drilled holes in the load carrying base 2. This is clearly illustrated in Fig 6. In another embodiment the pre-drilled holes are replaced by continuous grooves such that any distance between the wheels may be chosen.

Since different use applications puts different demands on the roll container 1, the base 2 of the invention may be arranged with only conventional wheels 5, one wheel pair with castor wheels 5a and one with conventional wheels 5, or both wheel pairs with castor wheels. The pivoting beam 6 is configured to function with both castor wheels 5a and conventional wheels 5.

It should be mentioned that the inventive concept is by no means limited to the embodiments described herein, and several modifications are feasible without departing from the scope of the invention as defined in the appended claims. For instance, bases 2 with more than two wheel pairs can be envisioned.

## Claims

1. Load carrying base for a roll container (1), said base (2) defining a front portion (3) and a rear portion (4), wherein onto said base (2) are arranged four wheels (5, 5a) such that one wheel is arranged on the left and one on the right side of the front portion (3) and one wheel is arranged on the left and one on the right side of the rear portion (4) forming a front wheel pair and a rear wheel pair, wherein at least one wheel pair are caster wheels (5a) and wherein at least one wheel pair is arranged on a pivoting member (6) pivotably supported by the base (2), wherein the wheels (5, 5a) of at least one wheel pair are arranged offset in the longitudinal direction of the base (2) in relation to each other.

2. Load carrying base according to claim 1, wherein the shape of the pivoting member (6) is such that it tapers towards the peripheral ends by the upper side of the member (6) being inclined.

3. Load carrying base according to claim 1 or 2, wherein the pivoting member (6) is pivotable around an axis (7), wherein the axis (7) is provided with suspension means such that the member (6) is biased towards a position in which it is parallel with the base (2).

4. Load carrying base according to any one of the preceding claims, wherein the front wheel pair is arranged on a pivoting member (6).

5. Load carrying base according to any one of the preceding claims, wherein the rear wheel pair is arranged on a pivoting member (6).

6. Load carrying base according to any one of claims 3-5, wherein the wheels (5, 5a) of both wheel pairs are arranged offset in the longitudinal direction of the base (2) in relation to each other such that the wheels (5, 5a) on one side of the base (5, 5a) are positioned forward of the respective wheels on the other side of the base (2).

7. Load carrying base according to claim 6, wherein the wheels (5, 5a) of both wheel pairs are attached offset in the longitudinal direction of the base (2) in relation to each other such that the wheels (5, 5a) on one side of base (2) are closer together than the wheels on the other side of the base (2).

8. Load carrying base according to nay one of claims 3 to 7, wherein the longitudinal distance between the wheels (5, 5a) in each offset wheel pair is in the range of 0 to 100 mm.

9. Load carrying base according to any one of the preceding claims, wherein the pivoting member (6) is allowed to pivot ± 0° to 3,5°, or more preferably ± 0° to 2,5° in relation to the base (2).

10. Load carrying base according to any previous claim, wherein the pivoting member (6) is centrally attached to the base (2) such that it is pivotable around an axis (7) essentially parallel with the longitudinal direction of the base (2).

11. Roll container for carrying goods and for facilitating transportation of said goods, wherein said roll container (1) comprises a load carrying base (2) according to any one of the previous claims.
